# FASCICULE DE BREVET EUROPEEN

(11) **EP 2 859 264 B1**
(45) Date de publication et mention de la délivrance du brevet: **26.07.2017**
(21) Numéro de dépôt: 13733382.9
(22) Date de dépôt: 10.06.2013
(51) Int. Cl.: B29C 65/14, B29C 65/02, F16L 55/18, F16L 55/168, B29C 63/10, B29C 65/00

(54) **DISPOSITIF ET PROCÉDÉ DE RÉPARATION D'UN CORPS LONGILIGNE**
VORRICHTUNG UND VERFAHREN ZUR REPARATUR EINES LÄNGLICHEN KÖRPERS
DEVICE AND METHOD FOR REPAIRING AN ELONGATE BODY

(30) Priorité: 08.06.2012 FR 1255376
(43) Date de publication de la demande: 15.04.2015
(73) Titulaire: 3X Engineering, 9800 Monaco (MC); Total SA, 92400 Courbevoie (FR)
(72) Inventeur: SLIMANI, Hacen, 06000 Nice (FR); BOULET D'AURIA, Stanislas, 06230 Villefranche Sur Mer (FR); WIET, Paul, 78150 Le Chesnay (FR)
(74) Mandataire: Lavoix
(86) Numéro de dépôt international: PCT/FR2013/051341
(87) Numéro de publication internationale: WO 2013/182831

(56) Documents cités:
- EP-A2- 1 016 514
- FR-A1- 2 666 864
- US-B1- 6 405 671

## Description

### Domaine de l'invention

La présente invention concerne un dispositif de réparation d'un corps longiligne et un procédé de réparation d'un tel corps. Plus particulièrement, la présente invention concerne la réparation ou le renforcement local de canalisations de transport d'eau, de gaz, de pétrole et d'autres fluides.

### Etat de l'art

Les canalisations sous-marines ou terrestres destinées au transport de fluides (telles que les aqueducs pour l'eau, oléoducs pour le pétrole) ou de gaz subissent des agressions thermiques, physiques ou chimiques qui occasionnent des dommages. La réparation de ces dommages est coûteuse. Ces canalisations sont généralement de section sensiblement circulaire.

La réparation d'une telle canalisation peut se faire par différentes techniques telles que la soudure ou la fixation d'une manchette et/ou le remplacement total d'un segment. L'inconvénient majeur du remplacement d'un tronçon de canalisation est qu'elles sont contraignantes à employer car elles nécessitent l'arrêt du flux de l'effluent interne tel que liquide, gaz ou autres mélanges, dans la portion de canalisation à réparer. Les techniques de réhabilitation par l'extérieur des canalisations permettent d'éviter le remplacement du tronçon de canalisation.

Le document FR1004758, du même inventeur, concerne un dispositif de réparation d'une canalisation, ledit dispositif comprenant une plaque d'élastomère appliquée sur la fuite par un répartiteur de forces et sanglée autour de la canalisation, permettant de colmater ainsi le trou ou la fissure.

On connaît le document FR 2 666 864, qui décrit un système de déroulage d'une bande composée de fibres noyées dans du thermoplastique. Une telle bande ne peut assurer une bonne étanchéité du fait même de la plasticité de sa matière. De plus, en milieu sous-marin, le chauffage de la bande est particulièrement délicat et irrégulier. Les défauts d'homogénéité de l'élasticité ainsi obtenue augmentent la fragilité de la réparation. L'élasticité de la bande thermoplastique limite l'utilisation de ce système pour la réparation de canalisations sous pression. Enfin, ce document présente l'assemblage de spires successives jointives, qui présentent une faiblesse d'étanchéité à leur frontière.

### Exposé de l'invention

Un but de l'invention est de fournir un dispositif de réparation ou le renforcement local d'un corps longiligne, fiable, rapide, facile à mettre en oeuvre et permettant l'enroulement d'une bande pré-imprégnée polymérisable autour de la zone à réparer.

Un autre but de l'invention est de fournir un dispositif de réparation ou de renforcement local d'un corps longiligne capable de s'adapter à différents diamètres et à différentes formes dudit corps longiligne.
À cet effet, selon un premier aspect, la présente invention vise un dispositif de réparation ou de renforcement local d'un corps longiligne présentant une altération de son intégrité, selon la revendication 1.

En d'autres termes, le dispositif est fixé, par le moyen de fixation, sur la face extérieure du corps longiligne au niveau de la zone à réparer ou à renforcer.

Par « corps longiligne» on entend un objet sensiblement plus long que large tel que les canalisations pour le passage d'un fluide mais également les piliers. Le corps longiligne peut être de section symétrique ou non symétrique, cylindrique, de forme ronde ou carrée par exemple.

On définit, pour la suite de la description, un axe longitudinal X, parallèle à l'axe principal local du corps longiligne à réparer.

Une bobine de bande pré-imprégnée polymérisable est liée à un support attaché au dispositif. Le support est configuré pour se mouvoir en rotation autour du moyen de fixation, et donc autour du corps longiligne. Il entraîne aussi la bobine afin d'enrouler la bande pré-imprégnée polymérisable autour de la zone de la surface à réparer ou à renforcer. La bobine est liée au support par une liaison qui lui permet d'effectuer un mouvement longitudinal dans les deux sens selon une direction prédéterminée, de préférence selon une direction parallèle à l'axe x. L'amplitude de ce mouvement est déterminée par des moyens du support, par exemple par la longueur du support.

Le fonctionnement du dispositif est le suivant. Une fois le dispositif installé sur le corps longiligne au niveau de la zone à réparer, la bobine est actionnée en rotation autour de la surface afin d'enrouler la bande pré-imprégnée polymérisable autour de la zone à réparer ou à renforcer. Le mouvement en rotation est accompagné d'un mouvement en translation parallèlement à un axe longitudinal du corps longiligne prédéterminé dans un premier sens. Une fois la première couche de bande pré-imprégnée polymérisable enroulée, la bobine est actionnée en rotation et en translation dans le sens opposé, ce qui permet d'enrouler de manière homogène, et avec un pas d'enroulement régulier, une deuxième couche par-dessus la première. Plusieurs couches de bande pré imprégnée polymérisable sont ainsi enroulées sur la zone à réparer ou à renforcer. Le dispositif permet un enroulement de la bande homogène, c'est-à-dire avec une pression et un pas réguliers ce qui permet de restituer l'intégrité mécanique de la zone altérée.

Il est notable que le dispositif est simple de mise en oeuvre, ce dispositif étant facilement transportable sur le site et aisément actionnable par un opérateur. Alternativement, le dispositif peut être mis en oeuvre par un automate, notamment de type commandé à distance qui permet de s'assurer de la répétabilité du processus de renforcement ou de réparation.

L'invention peut être mise en oeuvre selon les modes de réalisations avantageux exposés ci-après faisant l'objet des revendications 2 à 12, lesquels peuvent être considérés individuellement ou selon toute combinaison opérante.

Le dispositif est adapté à la réparation ou au renforcement local des canalisations terrestres ou sous-marines transportant des fluides ou des gaz, par exemple les oléoducs.

La bobine étant amovible, elle peut être remplacée par une autre bobine autant de fois que nécessaire pour la réparation de la zone altérée.

Dans des modes de réalisation, les moyens de fixation du dispositif sur le corps longiligne comprennent au moins deux mâchoires destinées à se fixer autour du corps longiligne.

Par « mâchoire » on entend une pièce de forme adaptée à venir se fixer sur le corps longiligne à une deuxième pièce.

Les deux mâchoires du moyen de fixation sont configurées pour se fixer sur des corps longilignes présentant des diamètres compris entre deux valeurs prédéterminées. Ainsi, le dispositif peut avantageusement s'adapter à plusieurs types de corps longilignes.

Dans des modes de réalisation, le dispositif objet de la présente invention comporte au moins deux demi-guides destinés à se fixer entre eux autour du corps longiligne.

Dans des modes de réalisation, le support longitudinal est une poutre, d'une rigidité supérieure à une valeur prédéterminée, comprenant des barres longitudinales configurées pour soutenir une bobine, ladite poutre étant fixée au moyen de fixation du dispositif par l'une de ses extrémités et étant configurée pour se mouvoir en rotation autour de l'axe longitudinal du corps longiligne.

Avantageusement, la poutre permet d'assurer une grande stabilité du dispositif notamment lorsque la bobine est en mouvement.

De préférence, le support comprend un système de pignons qui permet le mouvement en rotation du support autour du moyen de fixation et du corps longiligne.

Dans des modes de réalisation, le support longitudinal est une poutre triangulée par une barre diagonale. Avantageusement, la barre diagonale permet d'augmenter encore davantage la rigidité de la poutre et donc la stabilité du support.

Dans des modes de réalisation, le dispositif objet de la présente invention comporte, en outre, des moyens pour positionner la bobine selon une orientation prédéterminée par rapport à la surface du corps longiligne.

Dans des modes de réalisation, le dispositif objet de la présente invention comporte, en outre, des moyens pour positionner la bobine à une distance prédéterminée de la surface du corps longiligne.

A titre d'exemple non limitatif, les moyens pour positionner la bobine peuvent être les barres du support. Préférentiellement, la bobine est fixée sur au moins deux barres de soutien parallèles faisant partie du support, et est solidarisée à un chariot comprenant des rouleaux de mise en tension de la bande et/ou d'application de la bande sur le corps longiligne avec une pression prédéterminée constante, quel que soit le nombre de tours d'enroulement.

Ainsi, le dispositif objet de l'invention permet un enroulement de la bande pré-imprégnée polymérisable avec une tension et un pas d'enroulement homogènes et/ou réglables.

Lorsqu'on enroule des couches successives de bande pré-imprégnée polymérisable il faut tenir compte de l'augmentation du diamètre. L'avantage du dispositif de l'invention est qu'il permet un enroulement de la bande avec une tension et un pas constants. De plus, le pas et la tension de la bande ajustés au fur et à mesure de l'enroulement ce qui permet une réparation durable et pérenne. Dans des modes de réalisation préférés, l'enroulement peut être interrompu à tout moment par l'opérateur.

Dans des modes de réalisation, la bobine est fixée sur au moins deux barres de soutien parallèles faisant partie du support, et est solidarisée à un chariot comprenant des rouleaux de mise en tension de la bande avec une tension constante, quel que soit le nombre de tours d'enroulement.

Dans des modes de réalisation, la bobine est fixée sur au moins deux barres de soutien parallèles faisant partie du support, et est solidarisée à un chariot comprenant des rouleaux d'application de la bande sur le corps longiligne avec une pression constante, quel que soit le nombre de tours d'enroulement.

Dans des modes de réalisation, le dispositif objet de la présente invention comporte, en outre, des moyens de mise en mouvement automatique en rotation de la bobine.

Dans des modes de réalisation, le dispositif objet de la présente invention comporte, en outre, des moyens de mise en mouvement automatique en translation longitudinale de la bobine dans les deux sens selon une direction longitudinale du corps longiligne.

Ces moyens permettant un mouvement automatique peuvent-être par exemple un système d'engrenages et de tiges filetées du type connu de l'homme du métier.

Dans des modes de réalisation, le dispositif objet de la présente invention comporte, en outre, un compteur de tours du corps longiligne effectués par le support.

Dans des modes de réalisation, le dispositif objet de la présente invention comporte, à une extrémité de la structure de support, une roulette en appui sur le corps longiligne.

Dans des modes de réalisation, le dispositif objet de la présente invention qui comporte, à une extrémité de la structure de support, un patin en appui sur le corps longiligne.

Grâce à chacune de ces dispositions, la structure de support reste à une distance prédéterminée et parallèle au corps longiligne.

Dans des modes de réalisation, le moyen de fixation du dispositif au corps longiligne comprend deux parties, composées chacune de deux mâchoires, configurées pour se fixer de part et d'autre d'une zone endommagée du tube, le support comprend des barres longitudinales parallèles fixées à chacune de leurs extrémités aux anneaux de fixation et mobiles en rotation autour du corps longiligne, la bobine de bande pré-imprégnée polymérisable étant fixée sur au moins deux de ces barres, mobile en translation dans les deux sens.

Dans des modes de réalisation, le moyen de fixation du dispositif sur le tube comprend deux chaînes configurées pour se fixer de part et d'autre de la zone endommagée du corps longiligne. Chacune des chaînes est adaptée à effectuer un parcours entre des roues dentées mobiles en rotation sur la chaîne. Une barre longitudinale de longueur prédéterminée est en liaison à chacune de ses extrémités avec lesdites roues dentées. Une bobine de bande pré-imprégnée polymérisable est en liaison sur la barre longitudinale de support et est configurée pour se mouvoir en translation sur le support dans les deux sens.

Selon un deuxième aspect, la présente invention vise un engin sous-marin commandé à distance, selon la revendication 12.

Le dispositif peut notamment être actionné par des moteurs hydrauliques ou électriques, en prise directe ou indirecte sur les axes d'enroulement. Le dispositif est éventuellement alors visualisé à distance par caméra et opéré à distance pour permettre des réparations semi-automatiques en s'affranchissant de la plongée humaine.

Dans des modes de réalisation, l'engin objet de la présente invention comporte, en outre, des moyens d'actionnement à distance du dispositif objet de la présente invention.

Dans des modes de réalisation, l'engin objet de la présente invention comporte au moins une caméra et un dispositif de transmission à distance d'images captées par chaque dite caméra.

Selon un troisième aspect, la présente invention vise un procédé de réparation d'un corps longiligne selon la revendication 14.

Dans l'étape d'actionnement du dispositif, la mise en mouvement de la bobine peut être faite manuellement ou de manière automatique, par exemple par un système de pignons. Alternativement, cette mise en mouvement peut être réalisée en utilisant des moteurs hydrauliques ou tout autre dispositif connu de l'homme de l'art.

Dans des modes de réalisation, le procédé objet de la présente invention comporte, au cours de l'étape d'actionnement, entre deux parcours d'une bobine le long et autour de la canalisation, on remplace la bobine pour changer, entre deux couches successives, les caractéristiques de la bande pré-imprégnée polymérisable à enrouler.

Dans des modes de réalisation, le procédé objet de la présente invention comporte une étape de comptage, par un compteur, et de mémorisation du nombre de tours effectués par la bobine autour de la zone à réparer ou à renforcer.

Dans des modes de réalisation, une calibration initiale permet de reproduire, lors des enroulements, la tension souhaitée de la bande pré-imprégnée polymérisable.

Les avantages, buts et caractéristiques de cet engin et de ce procédé étant similaires à ceux du dispositif de réparation objet de la présente invention, ils ne sont pas répétés ici.

### Présentation des figures

D'autres avantages, buts et caractéristiques de la présente invention ressortiront de la description qui va suivre faite, dans un but explicatif et nullement limitatif en regard des dessins annexés, dans lesquels :
- La figure 1 et 2 représentent, schématiquement, une vue en perspective, respectivement après et avant fixation sur une canalisation, d'un mode de réalisation particulier du dispositif objet de l'invention,
- La figure 3 représente, schématiquement, une vue en perspective d'un deuxième mode de réalisation particulier du dispositif objet de l'invention,
- La figure 4 représente, schématiquement, une vue en perspective d'un troisième mode de réalisation du dispositif objet de l'invention,
- La figure 5 représente, sous la forme d'un logigramme les différentes étapes d'un procédé de réparation ou de renforcement local d'une canalisation objet de l'invention et
- La figure 6 représente, schématiquement, une vue en perspective partielle d'une variante du premier mode de réalisation du dispositif illustré en figures 1 et 2.

### Description détaillée de l'invention

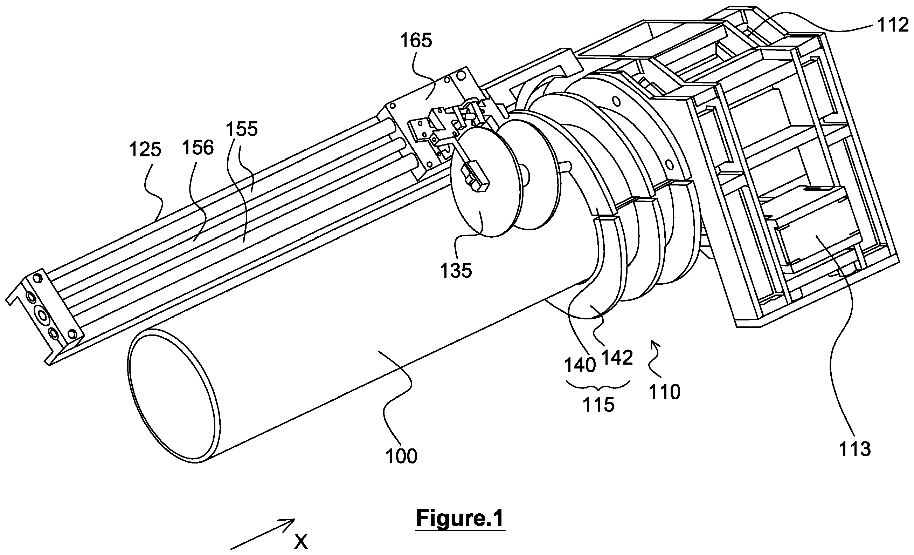

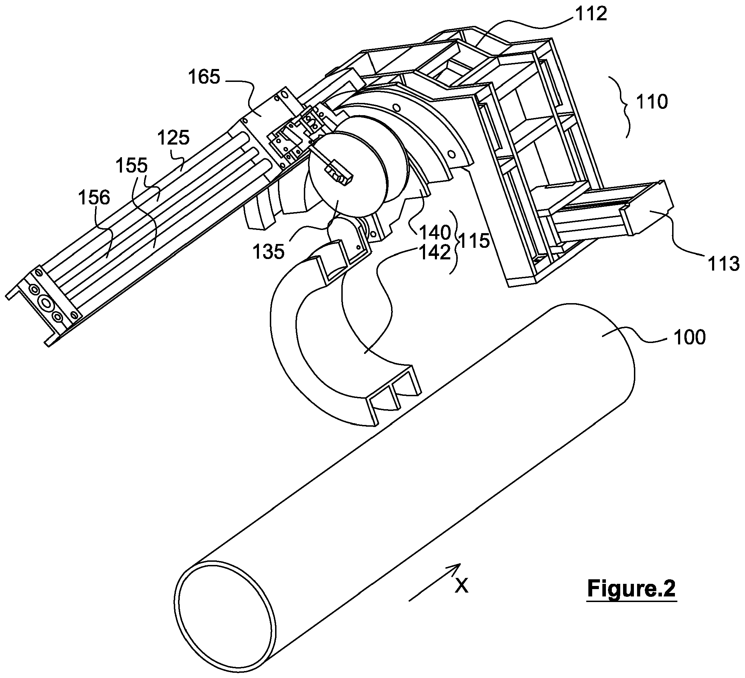

En référence aux figures 1 et 2, on décrit un mode particulier de réalisation du dispositif de réparation ou de renforcement local objet de l'invention.

Dans ce mode de réalisation, le corps longiligne à réparer ou à renforcer localement est une canalisation sous-marine transportant un fluide. Toutefois, le dispositif 110 est adapté à tout type de canalisation et à d'autres types de tubes, tels que les mâts de bateau ou les colonnes de piliers. Une portion d'une canalisation 100 tubulaire présente une zone altérée dans son intégrité, c'est-à-dire présentant une fissure, un enfoncement, une érosion ou une corrosion interne ou externe par exemple.

Le dispositif 110 objet de l'invention permet la réparation ou le renforcement local d'une zone endommagée de la surface d'une canalisation 100 par l'enroulement autour de la zone à réparer d'une ou plusieurs couches de bande pré-imprégnée.
Le dispositif 110 comprend :
- un moyen de fixation amovible sur la canalisation 100,
- un moyen de déplacement en rotation d'une structure de support 125 autour du moyen de fixation et par là autour de la canalisation 100,
- un moyen de déplacement longitudinal d'une bobine 135 de bande pré-imprégnée polymérisable par rapport à la structure du support 125, ledit support comportant des moyens pour limiter le déplacement de la bobine à un parcours prédéterminé, ladite bobine 135 étant déroulable lorsqu'elle est soumise à une tension donnée.

Le dispositif 110 permet le mouvement en rotation et en translation de la bobine 135, ce qui provoque l'enroulement autour de la canalisation 100 de la bande pré-imprégnée polymérisable, avec une tension homogène et un pas d'enroulement réglable. La bobine 135 est amovible. Elle peut être remplacée par une autre bobine sur le support.

La figure 1 représente un mode particulier de réalisation du dispositif 110. Dans ce mode de réalisation, le dispositif 110 se fixe de manière amovible sur la canalisation 100 par un moyen de fixation. Ce moyen de fixation comprend, dans ce mode de réalisation, au moins deux mâchoires 112 et 113. Les deux mâchoires 112 et 113 sont, dans le présent exemple nullement limitatif de mise en oeuvre, adaptées à se fixer sur plusieurs diamètres de canalisations. A cet effet, comme illustré en figure 1, la mâchoire 112 est prolongée par un support le long duquel la mâchoire 113 peut être déplacée longitudinalement, en fonction du diamètre de la canalisation 100 et, d'autre part, transversalement, comme on le voit en deux positions extrêmes de ce mouvement transversal, en figures 1 et 2.

Les deux mâchoires 112 et 113 se fixent autour de la canalisation 100 et se solidarisent entre elles grâce à des moyens de fixation et/ou d'ajustement. Par exemple, le mouvement des mâchoires 112 et 113 est similaire à celui d'un serre-joint. Les deux mâchoires 112 et 113 sont munies de coussinets permettant de protéger la canalisation 100 lors du serrage.

Dans ce mode de réalisation, le moyen de fixation comporte aussi un ensemble 115 d'au moins deux demi-guides circulaires.

Dans le mode de réalisation représenté dans les figures 1 et 2, l'ensemble 115 comporte quatre demi-guides 140 et 142 destinées à se fixer entre eux autour du corps longiligne 100 pour, d'une part, tenir le dispositif sur la canalisation 100 et, d'autre part, guider la rotation de la structure de support autour de la canalisation 100. En formant deux guides circulaires parallèles, comme illustré en figures 1 et 2, les quatre demi-guides 140 et 142 améliorent la rigidité du dispositif.

Un support longitudinal 125 est lié au moyen de fixation du dispositif. Dans ce mode de réalisation, le support longitudinal 125 est une poutre d'une rigidité supérieure à une valeur prédéterminée, triangulée par une barre diagonale.

Des barres 155 et 156 longitudinales configurées pour soutenir une bobine 135 sont fixées sur la poutre 125 du support. En outre, la poutre 125 est fixée au moyen de fixation du dispositif 1 10 par l'une de ses extrémités de manière à permettre au support 125 de se mouvoir en rotation autour du moyen de fixation et donc autour de la canalisation 100. Cette fixation est effectuée, dans un exemple de réalisation, par un système de pied à coulisse. De plus, un système de pignons, coopérant avec des crantages des guides 140 et 142 du moyen de fixation, permet le mouvement en rotation du support 125 autour du moyen de fixation.

Préférentiellement, le pas entre deux passages successifs de la bande pré-imprégnée polymérisable est inférieur à la largeur de la bande pré-imprégnée polymérisable.

La mise en mouvement du support 125 en rotation, de manière manuelle ou motorisée, entraîne simultanément la bobine 135 en rotation afin d'enrouler la bande pré-imprégnée polymérisable autour de la zone de la canalisation 100.

La poutre 125 permet de conférer une grande stabilité au dispositif notamment lorsque la bobine 135 est en mouvement. La barre diagonale renforce encore davantage la rigidité du dispositif.

La bobine 135 est liée à trois barres sensiblement parallèles 155 et 156 du support 125 tout en restant libre en translation par rapport à ces barres 155 et 156. Ces barres 155 et 156 permettent de positionner la bobine 135 de manière stable selon une orientation optimale par rapport à la canalisation 100, notamment selon une distance et un angle prédéterminés par rapport à la surface de la canalisation 100. Ainsi, la bobine 135 est liée au support 125 par une liaison qui lui permet d'effectuer un mouvement longitudinal dans les deux sens selon une direction prédéterminée. L'amplitude de ce mouvement est déterminée par des moyens du support, par exemple ici par la longueur des barres 155 et 156 du support 125.

Par ailleurs dans un exemple de réalisation donné ici à titre d'exemple, la bobine est reliée à un chariot 165 comprenant des rouleaux de mise en tension de la bande et/ou d'application de la bande sur la canalisation 100 avec une pression prédéterminée constante quel que soit le nombre de tours d'enroulement nécessaires.

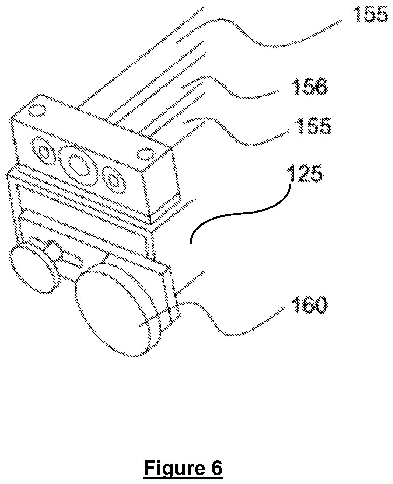

Comme illustré en figure 6, dans des modes de réalisation, une roulette 160 est ajoutée en bout de poutre 125. Cette roulette 160 repose sur la canalisation 100 et permet une meilleure stabilité de la structure de support de la bobine 135 lors de son mouvement en rotation autour de la canalisation 100. Dans des variantes, un patin (non représenté) pourvu d'un revêtement antifriction comme, par exemple, du téflon remplace la roulette 160 pour réaliser la même fonction de stabilisation et évite les problèmes liés à un éventuel grippage de la roulette 160.

Dans le présent exemple de réalisation, le dispositif 1 10 comprend en outre des moyens (non représentés sur les figures) pour permettre le mouvement automatique en rotation et/ou en translation longitudinale de la bobine 135 dans les deux sens, par exemple un système de pignons et de tiges filetées, de type connu de l'homme du métier.

### Mode de fonctionnement

Le dispositif 110 est tout d'abord amené au droit de la zone ce canalisation à réparer, et fixé sur ladite canalisation 100. Une fois installée sur la canalisation 100 au niveau de la zone à réparer, la bobine 135 est actionnée en rotation autour de la canalisation 100 afin d'enrouler la bande de pré-imprégné autour de la zone à réparer. Le mouvement en rotation est accompagné d'un mouvement en translation selon un axe longitudinal de la canalisation 100 prédéterminé dans une première direction.

Une fois la première couche de bande pré-imprégnée polymérisable enroulée, la bobine 135 est actionnée en rotation et en translation selon le sens opposé. Ce qui permet d'enrouler de manière homogène et avec un pas d'enroulement régulier une deuxième couche par-dessus la première.

Plusieurs couches de bande pré-imprégnée polymérisable sont ainsi enroulées sur la zone à réparer ou à renforcer localement. Le dispositif 1 10 réalise un enroulement de la bande homogène, c'est-à-dire avec une tension et/ou une pression et un pas réguliers ce qui permet, par exemple, de restituer l'intégrité mécanique de la zone altérée de la canalisation.

On note que deux phénomènes sont concomitants. D'une part, la tension initiale de la bande qui est assurée par un dispositif tel qu'un frein de dévidement d'une cassette porte bande. D'autre part, la pression de la bande, qui permet un essorage de la résine et de l'eau interstitielle et par suite une bonne application d'une bande sur une autre bande. Cette pression est la conséquence de la tension initiale de la bande.

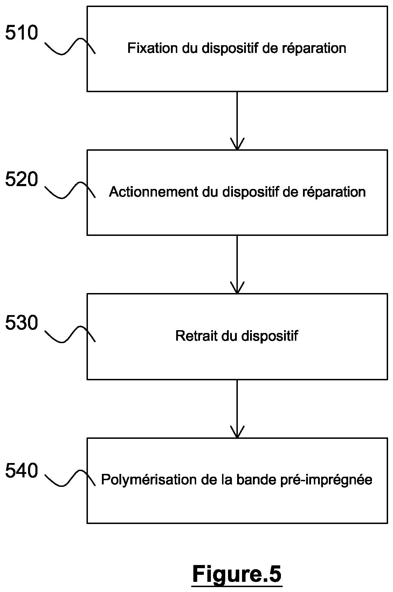

Plus précisément, le procédé de réparation ou de renforcement local d'un corps longiligne, est schématisé sous la forme d'un logigramme sur la figure 5. Dans un exemple de mise en oeuvre du procédé, le corps longiligne est une canalisation de transport d'un fluide.

Le procédé de réparation ou de renforcement local de la canalisation comprend :
- une étape 510 de fixation d'un dispositif 1 10 tel que décrit ci-dessus sur la canalisation 100 grâce aux moyens de fixation,
- une étape 520 d'actionnement du dispositif 1 10 par la mise en mouvement de la bobine 135 en rotation autour de la canalisation 100 et en translation selon une direction longitudinale de la canalisation 100 ce qui permet l'enroulement de couches successives de bandes pré-imprégnées polymérisables autour d'une zone prédéterminée de la canalisation 100,
- une étape 530 de retrait du dispositif 1 10, et
- une étape 540 de polymérisation des bandes pré-imprégnées polymérisables.

Ainsi, dans une première étape 510 un opérateur fixe le dispositif 110 au niveau de la zone de la canalisation 100 à réparer par les moyens de fixation 112 et 113. Le dispositif 1 10 est facilement transportable sur le lieu de la réparation et son poids est adapté à la manipulation par un ou plusieurs opérateurs ou plongeurs dans le cas d'une canalisation 100 sous-marine. Il est également adapté à la manipulation par un automate commandé à distance.

De plus le dispositif est adaptable à plusieurs diamètres de canalisation 100 et à des tailles variables de la zone à réparer.

Ensuite, dans une deuxième étape 520 le dispositif 1 10 est actionné manuellement ou automatiquement par la mise en mouvement de rotation de la bobine 135, 440 autour des moyens de fixation 1 12 et 1 13 et donc de la canalisation 100. Dans le même temps la bobine est mue en translation selon une direction longitudinale dans un premier sens afin d'enrouler une première couche de bande pré-imprégnée polymérisable autour de la zone à réparer. La bobine 135, 440 est maintenue sur le support selon une distance et un angle par rapport à la canalisation 100 prédéterminé ce qui permet un enroulement avec une tension et un pas régulier. Le parcours en translation de la bobine 135, 440 est délimité dans les deux sens par des moyens du support. Une fois la première couche enroulée, la bobine 135, 440 est actionnée dans le sens opposé de translation, toujours également en rotation autour de la canalisation 100 ce qui permet d'enrouler une deuxième couche de bande pré-imprégnée polymérisable par-dessus la première. Les couches de bande sont ainsi superposées de manière optimale en termes de tension et avec un pas régulier. Les opérations nécessitent peu d'efforts de la part d'opérateurs pour une réparation de qualité. Les actions sont répétées pour enrouler autant de couches que nécessaire pour permettre la réparation de la zone endommagée ou un renforcement local de la canalisation.

Dans des modes de réalisation particuliers du procédé objet de la présente invention, au cours de l'étape 520, entre deux parcours d'une bobine 135, 440 le long et autour de la canalisation, on remplace la bobine 135, 440 pour changer, entre deux couches successives, les caractéristiques, notamment chimiques ou mécaniques, de la bande pré-imprégnée polymérisable à enrouler. Par exemple, les bandes successives peuvent présenter des constituants différents (par exemple, fibres de carbone, fibres de verre ou autre constituant), des résines différentes, des tissages différents, des orientations de fibres ou de fils différentes, des largeurs différentes ou des épaisseurs différentes, On réalise ainsi une superposition de couches de bandes qui, une fois polymérisées, combinent leurs avantages techniques respectifs, notamment en termes de rigidité, isotropie, souplesse ou étanchéité.

Dans une troisième étape 530 le dispositif 1 10 est retiré de la canalisation 100, et dans une dernière étape 540, la polymérisation de la bande pré-imprégnée polymérisable est déclenchée par des moyens connus de l'homme du métier qui dépendent notamment du type de bande pré-imprégnée polymérisable utilisée et des conditions de la réparation. Par exemple cette polymérisation peut-être déclenchée par rayons ultraviolets ou par un apport thermique.

### Avantages de l'invention

On comprend que le dispositif 1 10 est simple de mise en oeuvre. En effet, ce dispositif 1 10 est facilement transportable sur le site et un opérateur ou un automate commandé à distance peut aisément l'actionner sous l'eau.

Le dispositif 1 10 est notamment adapté à la réparation ou au renforcement local des canalisations terrestres ou sous-marines transportant des fluides ou des gaz, par exemple les oléoducs ou des gazoducs.

Dans une application, le dispositif objet de la présente invention est intégré à ou porté par un engin sous-marin (non représenté). Préférentiellement, cet engin sous-marin et le dispositif objet de la présente invention sont commandés à distance. A cet effet, l'engin sous-marin objet de la présente invention comporte des moyens de communication et des moyens d'actionnement à distance du dispositif. Préférentiellement, l'engin sous-marin comporte au moins une caméra et un dispositif de transmission à distance d'images captées par chaque caméra. Ainsi, un opérateur situé à distance peut visualiser et commander la mise en place du dispositif sur le corps longiligne, puis le fonctionnement du dispositif.

### Variantes de réalisation

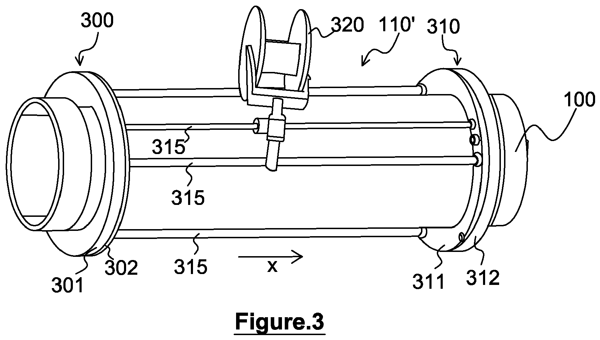

La figure 3 représente, schématiquement, un mode de réalisation alternatif du dispositif 110' objet de l'invention.

Dans ce mode de réalisation, le moyen de fixation du dispositif 110' à la canalisation 100 comprend deux ensembles 300 et 310 de deux demi-guides formés d'une gorge, respectivement 301 et 312, entourée de flancs, respectivement 302 et 311, portant des barres 315 de guidage parallèles à l'axe de la canalisation 100. Une bobine 320 est portée par une structure de support montée sur au moins une barre de guidage 315.

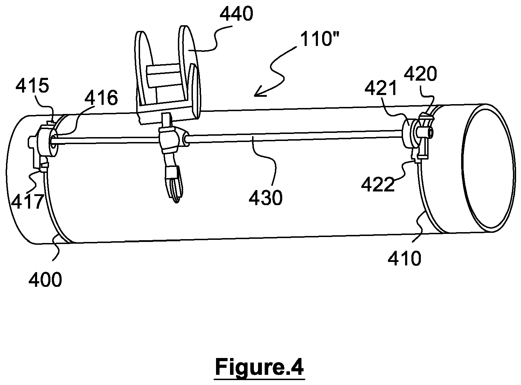

La figure 4 représente, schématiquement, un mode de réalisation alternatif du dispositif 110" objet de l'invention.

Dans ce mode de réalisation, le moyen de fixation du dispositif 110" à la canalisation 100 comprend deux chaînes 400, 410 configurées pour se fixer de part et d'autre de la zone endommagée de la canalisation 100. Chacune des chaînes 400, 410 effectue un parcours entre des roues dentées 415, 416, 417, 420, 421, 422 mobiles en rotation sur la chaîne 400, 410. Dans ce mode de réalisation, chaque chaîne 400, 410 effectue un parcours entre trois roues dentées 415, 416, 417 et 420, 421, 422, respectivement.

Les roues dentées 416 et 421 sont ainsi entraînées en rotation sur elles-mêmes lors de la rotation de la barre 430, qui forme leur axe commun, autour de la canalisation 100.

Le support est composé d'une barre 430 longitudinale, de longueur prédéterminée, qui est en liaison à chacune de ses extrémités avec les roues dentées 415, 416, 417, 420, 421, 422.

Sur la barre du support 430 est fixée une bobine 440 de bande pré-imprégnée. Cette bobine 440 configurée pour se mouvoir en translation sur la barre du support 430, dans les deux sens.

## Revendications

1. Dispositif (110, 110', 110") de réparation ou de renforcement local d'un corps longiligne (100) présentant une altération de son intégrité, ledit dispositif comporte :
- des moyens de fixation amovible (112, 113, 400, 410) autour du corps longiligne (100),
- une structure de support (125, 430) et des moyens de déplacement en rotation de la structure de support (125, 430) autour du moyen de fixation (112, 113, 400, 410),
- une bobine (135, 440) et des moyens de déplacement longitudinal de la bobine (135, 440) par rapport à la structure du support (125, 430), la structure de support (125, 430) comportant des moyens pour limiter le déplacement de la bobine à un parcours prédéterminé, ladite bobine (135, 440) étant déroulable lorsqu'elle est soumise à une tension donnée, et
- des moyens de mise en mouvement en rotation et en translation de la bobine (135, 440) autour du corps longiligne (100), **caractérisé en ce que** la bobine (135, 140) est une bobine de bande pré-imprégnée polymérisable, et **en ce que** les moyens de mise en mouvement en rotation et en translation sont propres à entraîner l'enroulement de la bande pré-imprégnée polymérisable autour dudit corps longiligne (100), ledit dispositif étant destiné à l'enroulement autour du corps longiligne (100) d'une ou plusieurs couches de bande pré-imprégnée polymérisable.

2. Dispositif selon la revendication 1, dans lequel les moyens de fixation (112, 113, 200, 210) du dispositif sur le corps longiligne (100) comprennent au moins deux mâchoires (112, 113) destinées à se fixer autour du corps longiligne.

3. Dispositif selon l'une des revendications 1 ou 2, qui comporte au moins deux demi-guides (140, 142) destinés à se fixer entre eux autour du corps longiligne (100).

4. Dispositif selon l'une des revendications 1 à 3, dans lequel le support longitudinal est une poutre (125), d'une rigidité supérieure à une valeur prédéterminée, comprenant des barres (155, 156) longitudinales configurées pour soutenir une bobine (135), ladite poutre (125) étant fixée au moyen de fixation (112, 113) du dispositif par l'une de ses extrémités et étant configurée pour se mouvoir en rotation autour de l'axe longitudinal du corps longiligne (100) ou/et dans lequel le support longitudinal est une poutre (125) triangulée par une barre diagonale.

5. Dispositif selon l'une des revendications 1 à 4, qui comporte, en outre, des moyens pour positionner la bobine (135) selon une orientation prédéterminée par rapport à la surface du corps longiligne (100) ou/et des moyens pour positionner la bobine (135) à une distance prédéterminée de la surface du corps longiligne (100).

6. Dispositif selon l'une des revendications 1 à 5, dans lequel la bobine (135) est fixée sur au moins deux barres (155, 156) de soutien parallèles faisant partie du support (125), et est solidarisée à un chariot (165) comprenant des rouleaux de mise en tension de la bande avec une tension constante, quel que soit le nombre de tours d'enroulement.

7. Dispositif selon l'une des revendications 1 à 6, dans lequel la bobine (135) est fixée sur au moins deux barres (155, 156) de soutien parallèles faisant partie du support (125), et est solidarisée à un chariot (165) comprenant des rouleaux d'application de la bande sur le corps longiligne (100) avec une pression constante, quel que soit le nombre de tours d'enroulement.

8. Dispositif selon l'une des revendications 1 à 7, qui comporte, en outre, des moyens de mise en mouvement automatique en rotation de la bobine (135, 440).

9. Dispositif selon l'une des revendications 1 à 8, qui comporte, en outre, des moyens de mise en mouvement automatique en translation longitudinale de la bobine (135, 440) dans les deux sens selon une direction longitudinale du corps longiligne (100).

10. Dispositif selon l'une des revendications 1 à 9, qui comporte, en outre, un compteur de tours du corps longiligne effectués par le support.

11. Dispositif selon l'une des revendications 1 à 10, qui comporte, à une extrémité de la structure de support (125), une roulette (160) en appui sur le corps longiligne (100) ou un patin en appui sur le corps longiligne (100).

12. Engin sous-marin commandé à distance, **caractérisé en ce qu'**il comporte un dispositif selon l'une des revendications 1 à 11,
le dispositif comprenant avantageusement en outre, des moyens d'actionnement à distance du dispositif selon l'une des revendications 1 à 11.

13. Engin sous-marin selon la revendication 12, qui comporte au moins une caméra et un dispositif de transmission à distance d'images captées par chaque dite caméra.

14. Procédé de réparation d'un corps longiligne présentant une altération de son intégrité, ou de renforcement local de sa surface, comprenant :
- une étape (510) de fixation d'un dispositif (110, 110', 110") selon l'une des revendications 1 à 13 sur le corps longiligne (100) grâce aux moyens de fixation (112, 113, 400, 410),
- une étape (520) d'actionnement du dispositif par la mise en mouvement de la bobine (135, 440) en rotation autour du corps longiligne (100) et en translation selon une direction longitudinale du corps longiligne (100) ce qui permet l'enroulement de couches successives de bandes pré-imprégnées polymérisables autour d'une zone prédéterminée du corps longiligne (100),
- une étape (530) de retrait du dispositif de réparation, et
- une étape (540) de polymérisation des bandes pré-imprégnées polymérisables.

15. Procédé selon la revendication 14, qui comporte, au cours de l'étape (520) d'actionnement, entre deux parcours d'une bobine (135, 440) le long et autour de la canalisation (100), on remplace la bobine (135, 440) pour changer, entre deux couches successives, les caractéristiques de la bande pré-imprégnée polymérisable à enrouler.

## Patentansprüche

1. Vorrichtung (110,110', 110") zur Reparatur oder zur lokalen Verstärkung eines langgestreckten Körpers (100), der eine Veränderung seiner Integrität aufweist, wobei die Vorrichtung aufweist:
- Mittel zur lösbaren Fixierung (112, 113, 400, 410) um den langgestreckten Körper (100) herum,
- eine Halterung-Struktur (125, 430) und Mittel zur Rotationsverlagerung der Halterung-Struktur (125, 430) um das Fixierungs-Mittel (112, 113, 400, 410) herum,
- eine Spule (135, 440) und Mittel zur Längsverlagerung der Spule (135, 440) bezüglich der Halterung-Struktur (125, 430), wobei die Halterung-Struktur (125, 430) Mittel zum Begrenzen der Verlagerung der Spule auf einen vorbestimmten Streckenverlauf aufweist, wobei die Spule (135, 140) abrollbar ist, wenn sie einem gegebenen Zug unterworfen ist, und
- Mittel um die Spule (135, 440) um den langgestreckten Körper (100) herum in Rotationsbewegung und in Translationsbewegung zu versetzen, **dadurch gekennzeichnet, dass** die Spule (135, 140) eine Spule mit vorimprägniertem, polymerisierbarem Band ist, und dass die Mittel zum Versetzen in Rotations- und in Translationsbewegung geeignet sind, um das Wickeln des vorimprägnierten, polymerisierbaren Bands um den langgestreckten Körper (100) herum anzutreiben, wobei die Vorrichtung bestimmt ist zum Wickeln von einer oder mehreren Lagen aus vorimprägniertem, polymerisierbarem Band um den langgestreckten Körper (100) herum.

2. Vorrichtung gemäß Anspruch 1, wobei die Mittel zur Fixierung (112, 113, 200, 210) der Vorrichtung an dem langgestreckten Körper (100) wenigstens zwei Backen (112, 113) aufweisen, die dazu bestimmt sind, um um den langgestreckten Körper herum fixiert zu sein.

3. Vorrichtung gemäß einem der Ansprüche 1 oder 2, welche wenigstens zwei Halb-Führungen (140, 142) aufweist, die dazu bestimmt sind, um untereinander um den langgestreckten Körper herum fixiert zu sein.

4. Vorrichtung gemäß einem der Ansprüche 1 bis 3, wobei die Längs-Halterung ein Tragebalken (125) ist, der eine Steifigkeit hat, die größer als ein vorbestimmter Wert ist, und der Längsstangen (155, 156) aufweist, die konfiguriert sind zum Stützen einer Spule (135), wobei der Tragebalken (125) an dem Fixierungs-Mittel (112, 113) der Vorrichtung fixiert ist über eines seiner Enden und konfiguriert ist, um sich um die Längsachse des langgestreckten Körpers (100) rotationsbewegen zu können und/oder wobei die Längs-Halterung ein Tragebalken (125) ist, der über eine diagonale Stange trianguliert ist.

5. Vorrichtung gemäß einem der Ansprüche 1 bis 4, welche ferner aufweist Mittel zum Positionieren der Spule (135) gemäß einer vorbestimmten Ausrichtung bezüglich der Oberfläche des langgestreckten Körpers (100) und/oder Mittel zum Positionieren der Spule (135) in einem vorbestimmten Abstand zu der Oberfläche des langgestreckten Körpers (100).

6. Vorrichtung gemäß einem der Ansprüche 1 bis 5, wobei die Spule (135) an wenigstens zwei parallelen Stütz-Stangen (155, 156) fixiert ist, welche einen Teil der Halterung (125) bilden, und mit einem Schlitten (165) fest verbunden ist, der aufweist Rollen zur Aufbringung von Zug auf das Band mit konstanter Zugspannung unabhängig von der Anzahl der Umwicklungswindungen.

7. Vorrichtung gemäß einem der Ansprüche 1 bis 6, wobei die Spule (135) an wenigstens zwei parallelen Stütz-Stangen (155, 156) fixiert ist, die Teil der Halterung (125) bilden, und fest mit einem Schlitten (165) verbunden ist, der aufweist Rollen zur Aufbringung des Bands auf den langgestreckten Körper (100) mit einem konstanten Druck unabhängig von der Anzahl der Umwicklungswindungen.

8. Vorrichtung gemäß einem der Ansprüche 1 bis 7, welche ferner aufweist Mittel zum automatischen Versetzen der Spule (135, 440) in Rotationsbewegung.

9. Vorrichtung gemäß einem der Ansprüche 1 bis 8, welche ferner aufweist Mittel zum automatischen Versetzen der Spule (135, 440) in Längs-Translationsbewegung in beide Richtungen entlang einer Längsrichtung des langgestreckten Körpers (100).

10. Vorrichtung gemäß einem der Ansprüche 1 bis 9, welche ferner aufweist einen Zähler der Windungen um den langgestreckten Körper, die von der Halterung durchgeführt werden.

11. Vorrichtung gemäß einem der Ansprüche 1 bis 10, welche an einem Ende der Halterung-Struktur (125) eine Rolle (160) in Auflage auf den langgestreckten Körper (100) oder einen Schuh in Auflage auf den langgestreckten Körper (100) aufweist.

12. Ferngesteuertes Unterwasser-Gerät, **dadurch gekennzeichnet, dass** es eine Vorrichtung gemäß einem der Ansprüche 1 bis 11 aufweist,
wobei die Vorrichtung vorteilhafterweise ferner Mittel zur Fernbetätigung der Vorrichtung gemäß einem der Ansprüche 1 bis 11 aufweist.

13. Unterwasser-Gerät gemäß Anspruch 12, welches wenigstens eine Kamera und eine Vorrichtung zur Fernübertragung von Bildern aufweist, die von jeder besagten Kamera gemacht sind.

14. Verfahren zur Reparatur eines langgestreckten Körpers, der eine Veränderung seiner Integrität aufweist, oder zur lokalen Verstärkung seiner Oberfläche, aufweisend:
- einen Schritt (510) der Fixierung einer Vorrichtung (110, 110', 110") gemäß einem der Ansprüche 1 bis 13 an dem langgestreckten Körper (100) mittels der Fixierungs-Mittel (112, 113, 400, 410),
- einen Schritt (520) der Betätigung der Vorrichtung durch Versetzen der Spule (135, 440) in Rotationsbewegung um den langgestreckten Körper (100) herum und in Translationsbewegung entlang einer Längsrichtung des langgestreckten Körpers (100), was das Aufwickeln von aufeinanderfolgenden Lagen von vorimprägnierten, polymerisierbaren Bändern um einen vorbestimmten Bereich des langgestreckten Körpers (100) herum erlaubt,
- einen Schritt (530) des Zurückfahrens der Reparatur-Vorrichtung, und
- einen Schritt (540) der Polymerisation der vorimprägnierten, polymerisierbaren Bänder.

15. Verfahren gemäß Anspruch 14, welches aufweist, während des Schritts (520) des Betätigens, zwischen zwei Streckenverläufen einer Spule (135, 440) entlang und um die Rohrleitung (100) herum, Auswechseln der Spule (135, 440), um zwischen zwei aufeinanderfolgenden Lagen die Charakteristiken des aufzuwickelnden vorimprägnierten, polymerisierbaren Bands zu ändern.

## Claims

1. Device (110, 110', 110") for repairing or locally reinforcing an elongate body (100) which has a modified integrity, the device comprising:
- means (112, 113, 400, 410) of removable fixation around the elongate body (100),
- a support structure (125, 430) and means of rotary movement of the support structure (125, 430) around the fixation means (112, 113, 400, 410),
- a spool (135, 440) and means of longitudinal movement of the spool (135, 440) relative to the support structure (125, 430), the support structure (125, 430) including means of limiting the movement of the spool to a predetermined course, the spool (135, 440) being able to be unwound when subjected to a specified tension, and
- means of causing rotary and translative movement of the spool (135, 440) around the elongate body (100),
**characterized in that** the spool (135, 140) is a spool of pre-impregnated polymerisable strip and **in that** the means of causing rotary and translative movement are able to cause the winding of the pre-impregnated strip around said elongate body (100), the device thus being able to wind one or more layers of a pre-impregnated polymerisable band around the elongate body (100),

2. Device according to claim 1, whereby the means (112, 113, 200, 210) of affixing the device to the elongate body (100) comprise at least two clamps (112, 113) to be affixed around the elongate body.

3. Device according to any one of claims 1 or 2, comprising at least two half-feeders (140, 142) to be affixed around the elongate body (100).

4. Device according to any one of claims 1 to 3, whereby the longitudinal support is a beam (125) having a rigidity greater than a predetermined value, comprising longitudinal bars (155, 156) configured to support a spool (135), the beam (125) being affixed to the fixation means (112, 113) of the device on one of its ends and being configured for rotational movement around the longitudinal axis of the elongate body (100) and/or the longitudinal support is a truss (125) triangulated by a diagonal bar.

5. Device according to any one of claims 1 to 4, further including means for positioning the spool (135) according to a predetermined orientation relative to the surface of the elongate body (100) and/or means for positioning the spool (135) at a predetermined distance from the surface of the elongate body (100).

6. Device according to any one of claims 1 to 5, whereby the spool (135) is affixed to at least two parallel support bars (155, 156) that are part of the support (125), and is connected with a carriage (165) comprising wheels for tensioning the strip at a constant pressure, for any number of winding steps.

7. Device according to any one of claims 1 to 6, whereby the spool (135) is affixed to at least two parallel support bars (155, 156) that are part of the support (125), and is connected with a carriage (165) comprising wheels for applying the strip to the elongate body (100) at a constant pressure, for any number of winding steps.

8. Device according to any one of claims 1 to 7, further including means for automatic rotary movement of the spool (135, 440).

9. Device according to any one of claims 1 to 8, further including means for automatic longitudinal movement of the spool (135, 440) in both directions according to a longitudinal direction of the elongate body (100).

10. Device according to any one of claims 1 to 9, further including a counter of the number of times the support has moved around the elongate body.

11. Device according to any one of claims 1 to 10, further including, at one end of the support structure (125), a roller (160) abutting the elongate body (100), or a pad bearing on the elongate body (100).

12. Remotely-operated underwater vehicle, **characterised in that** it includes a device according to any one of claims 1 to 11, the device advantageously further including means for remote actuation of the device according to any one of claims 1 to 11.

13. Underwater vehicle according to claim 12, including at least one camera and a device for remote transmission of the images captured by each camera.

14. Method for repairing an elongate body which has a modified integrity, or for locally reinforcing its surface, comprising:
- affixing (510) a device (110, 110', 110") according to anyone of claims 1 to 13 to the elongate body (100) by means of fixation means (112, 113, 400, 410),
- actuating (520) the device by causing the spool (135, 440) to move rotationally around the elongate body (100) and in translation in a longitudinal direction of the elongate body (100), allowing successive layers of pre-impregnated polymerisable strips to be wound around a predetermined area of the elongate body (100),
- withdrawing (530) the repair device, and
- polymerizing (540) the pre-impregnated polymerisable strips.

15. Method according to claim 14, including, during the step (520), the replacement of the spool (135, 440) between two passes of a spool (135, 440) along and around the pipe (100) to change the characteristics of the pre-impregnated polymerizable strip being wound between two consecutive layers.
